# EUROPEAN PATENT SPECIFICATION

(11) **EP 3 450 987 B1**
(45) Date of publication and mention of the grant of the patent: **05.07.2023**
(21) Application number: 18187617.8
(22) Date of filing: 07.08.2018
(51) Int. Cl.: G01P 3/49, G01P 3/50

(54) **SPEED DETECTING DEVICE AND STRAY MAGNETIC FIELD SUPPRESSING METHOD**
GESCHWINDIGKEITSERFASSUNGSVORRICHTUNG UND STREUMAGNETFELDUNTERDRÜCKUNGSVERFAHREN
DISPOSITIF DE DÉTECTION DE VITESSE ET PROCÉDÉ DE SUPPRESSION DE CHAMP MAGNÉTIQUE PARASITE

(30) Priority: 07.08.2017 JP 2017152721
(43) Date of publication of application: 06.03.2019
(73) Proprietor: Nabtesco Corporation, Tokyo (JP)
(72) Inventor: FLANKL, Michael, 8092 Zürich (CH); TUEYSUEZ, Arda, 8092 Zürich (CH); KOLAR, Johann W., 8092 Zürich (CH); TSUKADA, Yusuke, Kobe-shi, Hyogo (JP); NAKAMURA, Kazuhito, Tokyo, Hyogo (JP)
(74) Representative: Grünecker Patent- und Rechtsanwälte PartG mbB

(56) References cited:
- DE-B3- 10 318 482
- DE-U1- 20 303 546
- JP-A- S57 124 257
- JP-A- 2007 078 558
- US-A- 3 786 354
- US-A- 5 939 879
- US-A1- 2015 323 348
- US-B2- 7 253 609

## Description

### TECHNICAL FIELD

The present invention relates to a speed detecting device that detects a speed in a non-contact manner and a stray magnetic field suppressing method.

### BACKGROUND

JP 2007 078558 A shows a a device for measuring the relative movement distance of a moving body, wherein two detection coils are disposed on both sides of a central excitation coil along one direction, or wherein four detection coils are disposed on both sides of the central excitation coil along two perpendicular directions. Thus, in any case, the moving distance measuring device of JP 2007 078558 A uses only one central excitation coil.

DE 203 03 546 U1 discloses an acceleration measuring device for measuring the relative acceleration in two different directions. In accordance with a preferred embodiment, a central permanent magnet is surrounded by four coil pairs arranged orthogonally to each other, wherein between the coils of each coil pair there is in each case an auxiliary permanent magnet. The coils are all detection coils for sensing an eddy current produced by magnetic fluxes generated by the permanent magnets.

According to the measuring device of US 7 253 609 B2, a scanning head comprises a magnet for generation of an exterior magnetic field approximately perpendicularly with respect to a surface of a wall constituting a Ferraris sensor, and a detector coil with an axis that extends approximately perpendicularly with respect to said surface of said wall. Said detector coil detects changes of an interior magnetic field caused by acceleration of components.

DE 103 18 482 A discloses an acceleration measurement device with a plurality of permanent magnets of alternating polarity which are arranged substantially perpendicular to a measuring means acting as an eddy current body. In a preferred embodiment three permanent magnets are used, wherein the direction of the magnetic pole of the central permanent magnet is opposite to the direction of the magnetic poles of the other two permanent magnets.

A method for calibration of an eddy current type meter is known from JP S57 124257 A. A detecting part of this eddy current type current meter is constituted of an exciting coil energized by an electric power source and detecting coils. The detection signals are differentially operated in an arithmetic circuit for velocity of flow, and are rectified and are smoothed, after which the result is indicated in an indicating instrument for velocity of flow.

Contactless speed sensors are used in a wide range of industrial fields such as machining, assembly, and moving bodies. Typically, such speed sensors are based on the optical (cameras, encoders) or electromagnetic (magnetoresistive elements, Hall elements) technology. That is, a conventional speed sensor calculates a speed from a temporal change in optical or magnetic discontinuity characteristics of a moving body as a measurement object. For this reason, the conventional speed sensor is incapable of speed measurement with respect to a moving body that is completely flat and thus has no discontinuity characteristics.

Available to detect a moving speed of such a completely flat moving body is a speed sensor that utilizes induced power induced by an eddy current (see JP H08 233843 A and JP H08 146024 A). In this speed sensor, a magnetic flux produced by an eddy current generated on a moving body as a result of the moving body moving through a magnetic flux produced by an excitation coil is detected by two detection coils. Depending on a speed of the moving body, a difference occurs between respective induced voltages in the two detection coils, and thus a difference voltage between these induced voltages is detected and used to estimate the speed.

An eddy current generated on the moving body by an alternating current flowing through the excitation coil and induced voltages generated in the detection coils by a magnetic flux produced by this eddy current are not so large, and it is, therefore, desirable that a yoke be provided around the excitation coil and the detection coils so as to prevent magnetic flux leakage, thus improving magnetic efficiency.

Accurate detection of a moving speed of the moving body, however, requires that various conditions such as a shape of the yoke, arrangements of the excitation coil and the detection coils, and a distance to the moving body be optimized.

In particular, in the above-mentioned speed sensor utilizing induced power produced by an eddy current, when a proportion of magnetic fluxes failing to be linked with the detection coils among magnetic fluxes generated by the excitation coil increases, a magnitude of an eddy current generated when the moving body moves decreases, so that the moving speed of the moving body can no longer be accurately detected.

### SUMMARY

An object of the present invention is to provide a speed detecting device capable of accurately detecting a speed of a relative moving body in a non-contact manner and a stray magnetic field suppressing method.

This object is achieved according to the present invention by providing a speed detecting device having the features of independent claim 1 and a stray magnetic field suppressing method having the features of independent claim 9. Further embodiments of the present invention are the subject of the dependent claims.

### BRIEF DESCRIPTION OF THE DRAWINGS

Fig. 1 is a view explaining a basic principle of a speed detecting device according to one embodiment not encompassed by the present invention.
Fig. 2A is a view showing a symmetric property of an eddy current.
Fig. 2B is a view showing an asymmetric property of an eddy current.
Fig. 3 is a view showing a path along which a magnetic flux produced by an eddy current passes in a case where a relative moving body is caused to move.
Fig. 4A is a waveform diagram of a difference voltage.
Fig. 4B is a waveform diagram of an output signal of a speed estimation portion.
Fig. 4C is a waveform diagram of an alternating current flowing through an excitation coil.
Fig. 5A is a view showing a speed detecting device according to a first modification example not encompassed by the present invention.
Fig. 5B is a view showing a speed detecting device according to a second modification example not encompassed by the present invention.
Fig. 6 is a view showing paths of magnetic fluxes in the speed detecting device in Fig. 1.
Fig. 7 is a view showing a speed detecting device according to one embodiment encompassed by the present invention.
Fig. 8 is a view showing paths of magnetic fluxes in the speed detecting device in Fig. 7.
Fig. 9 is a view showing a speed detecting device 1 according to a first modification example of a configuration in Fig. 7, which is encompassed by the present invention.
Fig. 10 is a view showing, as a first example, a further simplified configuration of the speed detecting device in Fig. 7, which is not encompassed by the present invention.
Fig. 11 is a view showing, as a second example, a further simplified configuration of the speed detecting device in Fig. 7, which is not encompassed by the present invetion.
Fig. 12 is a view showing one modification example of the configuration in Fig. 11, which is not encompassed by the present invetion.
Fig. 13 is a schematic plan view, as seen from above, of the speed detecting device according to the embodiment of the present invention.
Fig. 14 is a view showing an example in which an excitation coil in the center is formed in an annular shape and excitation coils around that excitation coil are each formed in a crescent shape.
Fig. 15 is a plan view showing a case where the speed detecting device in Fig. 9 is disposed in a two-dimensional direction.
Fig. 16 is a circuit diagram showing one example of a resonance circuit.
Fig. 17 is a view in which in addition to a circuit configuration in Fig. 16, detection coils are each also formed in a resonance circuit configuration.
Fig. 18 is a view showing a speed detecting device obtained by adding a current control portion to a configuration in Fig. 1, said device not being encompassed by the present invention.
Fig. 19 is a waveform diagram of an alternating current flowing through the excitation coil.

### DESCRIPTION OF EXAMPLE EMBODIMENTS

With reference to the appended drawings, the following describes one embodiment of the present disclosure. In the drawings appended hereto, for the sake of convenience of illustration and ease of understanding, a scale size, an aspect ratio, and so on are altered as appropriate from those of real things for emphasis.

Moreover, terms, values, and so on used herein to specify a shape, a geometric condition, and an extent thereof, such as, for example, terms including "parallel," "orthogonal," and "equal" and values of a length and an angle, are not bound to a strict meaning thereof but should be interpreted as covering a range that can be expected to achieve similar functionality.

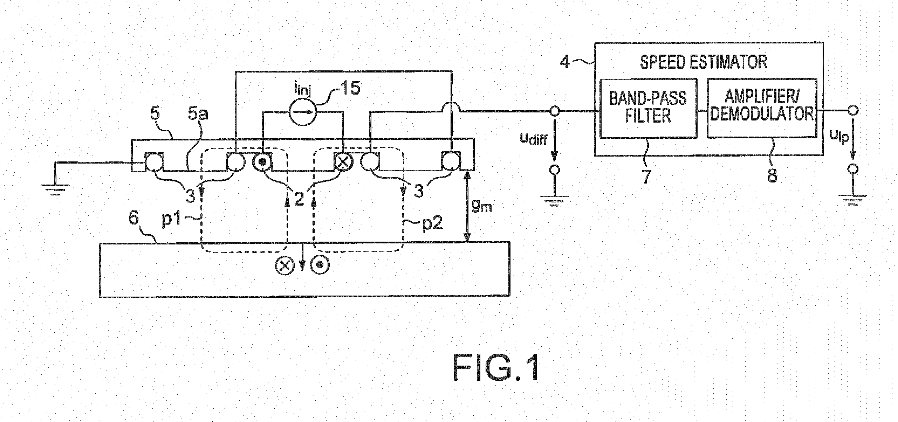

<Basic Principle> Fig. 1 is a view explaining a basic principle of a speed detecting device 1 according to an embodiment not encompassed by the present invention. The speed detecting device 1 in FIG. 1 is provided with an excitation coil 2, two detection coils 3, and a speed estimation portion 4. The two detection coils 3 have equal number of turns. While the number of excitation coils 2 used and the number of detection coils 3 used are arbitrary, Fig. 1 shows an example having one excitation coil 2 and two detection coils 3. The excitation coil 2 generates a magnetic flux corresponding to an alternating current. A relative moving body 6 formed of a conductor moves through the magnetic flux. The detection coils 3 each generate an induced voltage corresponding to a magnetic flux produced by an eddy current generated on the relative moving body 6 so as to correspond to a moving speed of the relative moving body 6.

The excitation coil 2 and the two detection coils 3 are disposed at a periphery of a yoke 5. The yoke 5 is a magnetic flux-concentrating member that passes a magnetic flux therethrough in a concentrated manner, the magnetic flux being linked with the excitation coil 2 and the two detection coils 3. More specifically, the two detection coils 3 are disposed on both sides of the excitation coil 2 along one direction (a longitudinal direction) of the yoke 5. As shown in Fig. 1, the yoke 5 includes three convex portions 5a, and the excitation coil 2 and the two detection coils 3 are wound on the convex portions 5a, respectively. As will be mentioned later, a shape of the yoke 5 is arbitrary, and the yoke 5 in Fig. 1 is merely one example. The coils are wound on the convex portions 5a, respectively, and thus magnetic flux leakage can be suppressed. Furthermore, the coils 2 and 3 can be created simply by winding a copper wire on the convex portions 5a, and thus workability is improved.

The relative moving body 6 is disposed so as to be spaced by a gap from a distal end portion of each of the convex portions 5a of the yoke 5. The relative moving body 6 is a conductor. The relative moving body 6 may be formed of a magnetic material or a non-magnetic material as long as it is a conductor. The relative moving body 6 is configured to be movable in one direction (the longitudinal direction of the yoke 5). The gap is typically an air gap and herein referred to simply as a gap. In the following description, it is assumed that the gap has a size equal to a distance between the excitation coil 2 and the relative moving body 6 and to a distance between each of the detection coils 3 and the relative moving body 6.

In performing speed detection, an alternating current having a predetermined frequency is supplied to the excitation coil 2. Equivalently, the alternating current is supplied from a current source 15 as shown in Fig. 1. By the alternating current flowing through the detection coils 3, a magnetic flux is generated and flows along paths p1 and p2 extending through the relative moving body 6, linked with the detection coils 3, and returning to the excitation coil 2, respectively. Fig. 1 shows an example in which the relative moving body 6 is stopped. In this embodiment, a current flowing in a direction from rear to front with respect to the plane of paper is indicated by "e," and a current flowing in a direction from front to rear with respect to the plane of paper is indicated by "x." Furthermore, an arrowhead of an arrow indicates a north pole side of a magnetic flux.

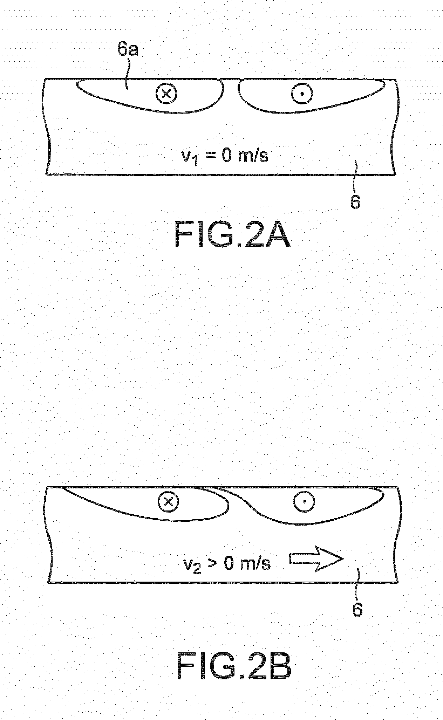

On the relative moving body 6, there is generated an eddy current produced by a magnetic flux generated by the excitation coil 2. The eddy current generates a magnetic flux in such a direction as to hinder a change in the magnetic flux generated by the excitation coil 2. The eddy current changes depending on an amplitude and a frequency of the alternating current flowing through the excitation coil 2, the gap between the excitation coil 2 and the relative moving body 6, the number of turns of the excitation coil 2, and a speed and a material of the relative moving body 6. During a time when the relative moving body 6 is stopped, as shown in Fig. 2A, the eddy current flows symmetrically on both sides of the excitation coil 2.

The magnetic flux produced by the alternating current flowing through the excitation coil 2 and the magnetic flux produced by the eddy current on the relative moving body 6 are linked with the two detection coils 3 provided on both sides of the excitation coil 2. In a state where the relative moving body 6 is stopped, the magnetic fluxes linked with the two detection coils 3, respectively, are equal in magnitude to each other, the magnetic fluxes being produced by the eddy current on the relative moving body 6. Therefore, a total amount of magnetic fluxes linked with one of the two detection coils 3 becomes equal to that of the other detection coil 3, and thus respective induced voltages in the detection coils 3 cancel out each other, so that a voltage inputted to the speed estimation portion 4 becomes zero. The speed estimation portion 4, therefore, estimates that the relative moving body 6 is stopped.

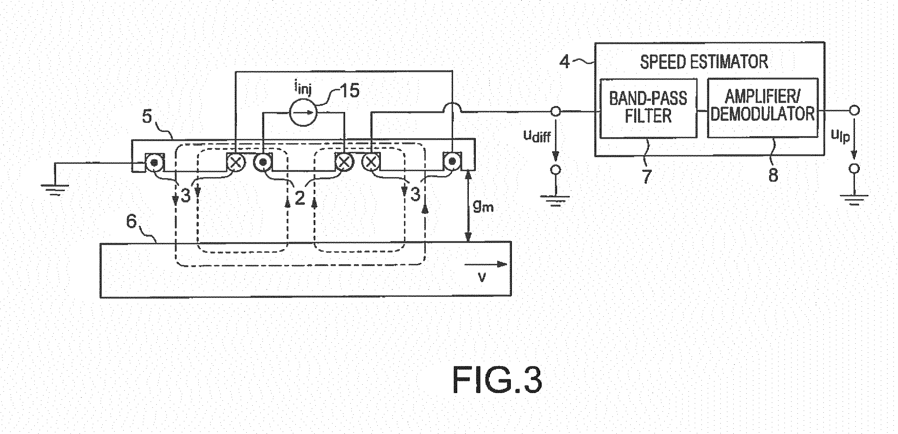

Here, as shown in FIG. 3, when the relative moving body 6 moves in an arrow direction (a rightward direction in the drawing) at a moving speed v, as shown in Fig. 2B, distortion occurs in an eddy current on the relative moving body 6. Fig. 3 shows an example in which, similarly to Fig. 1, there is generated a magnetic flux linked upward with the excitation coil 2. Such distortion in the eddy current is generated as a result of the relative moving body 6 moving through the magnetic flux generated by the excitation coil 2. Specifically, the eddy current on the relative moving body 6 is a sum of an eddy current generated by the magnetic flux of the excitation coil 2 in a state where the relative moving body 6 is stopped and an eddy current generated as a result of the relative moving body 6 moving through the magnetic flux of the excitation coil 2. The eddy current generated as a result of the relative moving body 6 moving through a magnetic field of the excitation coil 2 mainly flows immediately below the excitation coil 2 in a direction from the far side to the near side with respect to the plane of paper. A magnetic flux generated by this eddy current is linked upward with the detection coil 3 on the right disposed on a forward side in a travel direction of the relative moving body 6 and also linked downward with the detection coil 3 on the left disposed on a backward side in the travel direction of the relative moving body 6. Thus, there occurs a difference between an amount of the magnetic fluxes linked with the detection coil 3 on the forward side in the travel direction of the relative moving body 6 and an amount of the magnetic fluxes linked with the detection coil 3 on the backward side in the travel direction of the relative moving body 6, so that a difference voltage between respective induced voltages in the two detection coils 3 no longer becomes zero. As the moving speed of the relative moving body 6 becomes higher, the above-mentioned difference between the amounts of the magnetic fluxes linked with the detection coils 3, respectively, increases, so that a voltage difference occurring between the detection coils 3 increases accordingly. Therefore, based on the above-mentioned difference voltage, the speed estimation portion 4 can estimate the speed of the relative moving body 6.

As thus described, when the relative moving body 6 moves, an eddy current becomes asymmetric on the relative moving body 6 on both sides of the excitation coil 2, and this asymmetry causes a slight difference between magnetic fluxes linked with the two detection coils 3, respectively. This difference between the magnetic fluxes is detected as a difference voltage between induced voltages.

As shown in Fig. 1, the speed estimation portion 4 includes a band-pass filter 7 and an amplification/demodulation portion 8. The band-pass filter 7 eliminates noise included in a difference voltage between respective induced voltages in the two detection coils 3. Based on a voltage signal after being filtered through the band-pass filter 7, the amplification/demodulation portion 8 detects the moving speed of the relative moving body 6.

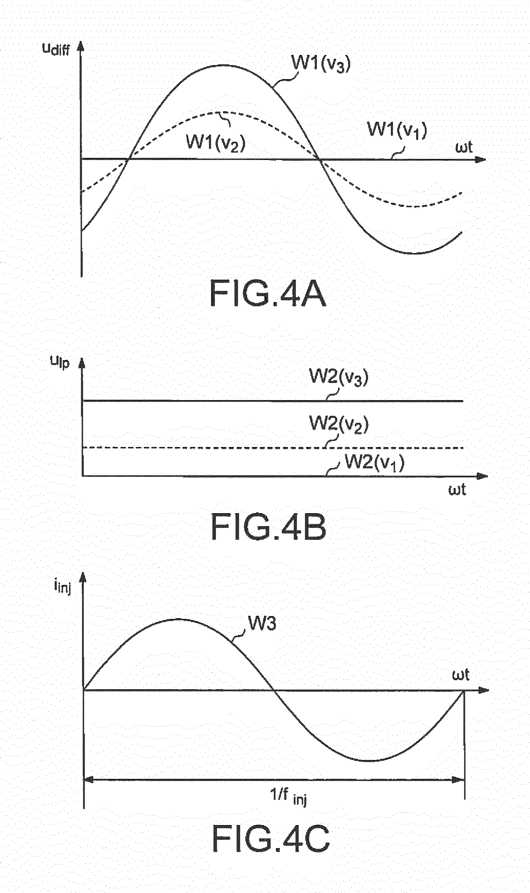

Fig. 4A is a waveform diagram of a difference voltage udiff, Fig. 4B is a waveform diagram of an output signal ulp of the speed estimation portion 4, and Fig. 4C is a waveform diagram of an alternating current iinj flowing through the excitation coil 2. A waveform w1 (v1) in Fig. 4A and a waveform w2(v1) in Fig. 4B represent a state where the relative moving body 6 is stopped, a waveform w1(v2) in Fig. 4A and a waveform w2(v2) in Fig. 4B represent a state where the relative moving body 6 is moving at a slow speed v2, and a waveform w1(v3) in Fig. 4A and a waveform w2(v3) in Fig. 4B represent a state where the relative moving body 6 is moving at a high speed v3. As can be understood from these waveform diagrams, as the moving speed of the relative moving body 6 becomes higher, an amplitude of the difference voltage udiff increases, and an amplitude of an output signal of the speed estimation portion 4 also increases. Therefore, based on an amplitude of the difference voltage udiff, the speed estimation portion 4 can estimate the speed of the relative moving body 6.

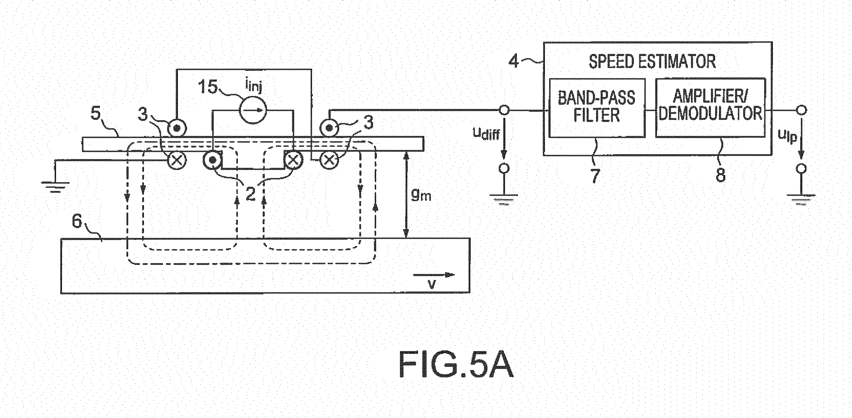

A shape of the yoke 5 and arrangements of the excitation coil 2 and the detection coils 3 are arbitrary, and various modification examples thereof are conceivable. Fig. 5A shows a speed detecting device 1 according to a first modification example. The speed detecting device 1 in Fig. 5A is provided with a T-shaped yoke 5 having a convex portion 5a in a middle portion in a longitudinal direction thereof, and an excitation coil 2 is would on the convex portion 5a. Two detection coils 3 are disposed on both sides of the excitation coil 2 and wound in a direction different by 90 degrees from a winding direction in Fig. 1. That is, the excitation coil 2 is wound on the convex portion 5a of the yoke 5 in a first width direction, and the two detection coils 3 are wound in a second width direction intersecting a first width defined by a body portion of the yoke 5. Since the detection coils 3 are wound on the body portion of the yoke 5, the body portion of the yoke 5 is formed to have a thickness reduced to such an extent that magnetic fluxes are not saturated therein, and thus it is possible to increase the number of turns of the detection coils 3 without increasing a size of the detection coils 3. This can improve detection sensitivity, and thus a change in moving speed of the relative moving body 6 can be sensitively detected. As a result, a current in the excitation coil 2 can be reduced, and power consumption can also be reduced.

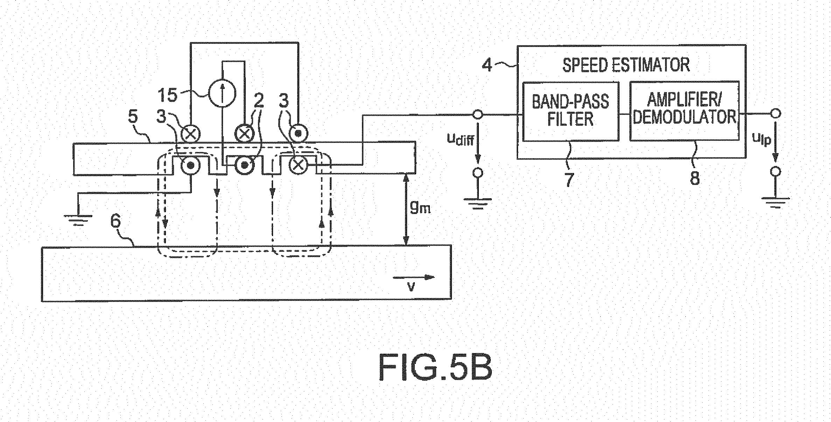

Fig. 5B shows a speed detecting device 1 according to a second modification example. Fig. 5B is different from Fig. 5A in that an excitation coil 2 is wound in a direction rotated 90 degrees. The excitation coil 2 in Fig. 5B is wound on a body portion of a yoke 5 in a second width direction thereof. In this configuration, a second width is set to be smaller than a first width, and thus a coil diameter of each of the excitation coil 2 and detection coils 3 can be made smaller than that in Fig. 1. This makes it possible to reduce a use amount of a material of each of the coils and thus to suppress a power loss due to a resistance component of each of the coils. For example, copper is used as the material of each of the coils, and the shorter a length of a wound wire of each of the coils, the less a copper loss. Furthermore, in Fig. 5B, the coils are wound directly on the body portion of the yoke 5 instead of a convex portion 5a thereof, and thus manufacturing equipment for winding a wire on the convex portion 5a is no longer needed, so that a manufacturing cost can be reduced.

For the sake of convenience, Fig. 1, Fig. 5A, and Fig. 5B show an example in which the alternating current iinj is passed from the current source 15 through the excitation coil 2. In practice, however, an alternating voltage source is connected to the excitation coil 2, and the alternating current iinj is passed therefrom through the excitation coil 2. For the sake of simplicity, herein, the description assumes that the alternating current iinj is passed from the current source 15 through the excitation coil 2.

<Suppression of Stray Magnetic Field> As shown in Fig. 1, the excitation coil 2 is disposed in the center and the two detection coils 3 are disposed on both sides of the excitation coil 2 along the longitudinal direction of the yoke 5 so that the excitation coil 2 extends 1/3 of a length of the yoke 5 in the longitudinal direction. Such a case leads to occurrence of magnetic flux leakage from both end sides of the excitation coil 2. This magnetic flux leakage might have some adverse effect on devices located around the speed detecting device 1.

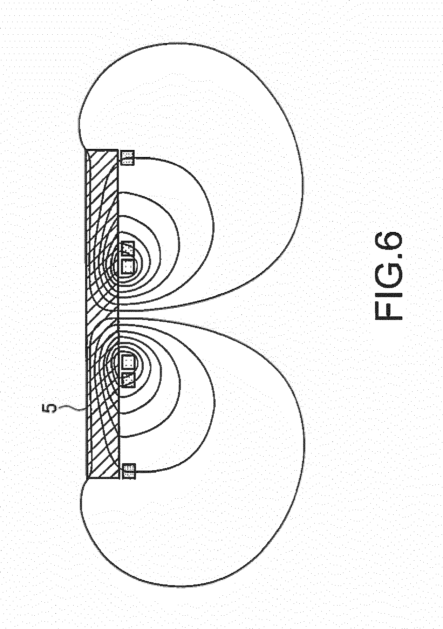

Fig. 6 is a view showing paths of magnetic fluxes in the speed detecting device in Fig. 1. As shown, magnetic fluxes generated by the alternating current iinj flowing through the excitation coil 2 not only pass through the detection coils 3 on both sides of the excitation coil 2 but also travel further to the outside of the detection coils 3, and a magnetic flux failing to be linked with the detection coils 3 is also generated. Herein, such a magnetic flux failing to be linked with the detection coils 3 is referred to as a stray magnetic field.

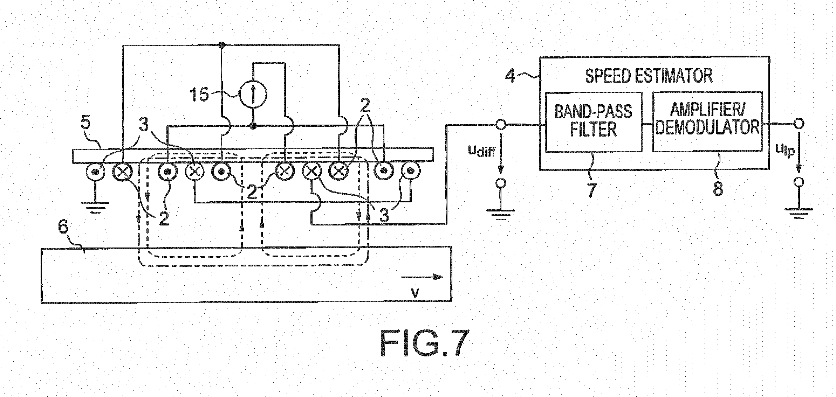

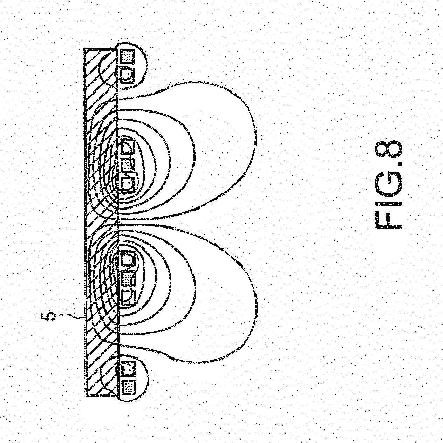

Fig. 7 is a view showing a speed detecting device 1, and Fig. 8 is a view showing paths of magnetic fluxes in the speed detecting device in Fig. 7. The speed detecting device 1 in FIG. 7 is provided with n (n is an integer of 3 or greater) excitation coils 2, a plurality of detection coils 3, and a speed estimation portion 4.

By using magnetic fluxes generated so as to correspond to the alternating currents iinj, the n excitation coils 2 generate an eddy current on a relative moving body 6 formed of a conductor. In an example shown in Fig. 7, three excitation coils 2 are provided. The excitation coils 2 have equal number of turns, and the alternating current iinj is passed through a central one of the excitation coils 2, while a current in an amount 1/2 that of the alternating current iinj is passed through each of the excitation coils on both sides of the central one. Furthermore, the excitation coils 2 are connected so that a magnetic flux generated by the central one of the excitation coils 2 and a magnetic flux generated by each of the excitation coils 2 on both sides of the central one are directed in opposite directions to each other.

The relative moving body 6 moves through the magnetic fluxes corresponding to the alternating currents iinj flowing through the n excitation coils 2. In each of the detection coils 3, there is generated an induced voltage corresponding to a magnetic flux produced by an eddy current generated on the relative moving body 6 so as to correspond to a moving speed of the relative moving body 6. In the example shown in Fig. 7, two detection coils 3 are provided. The detection coils 3 have equal number of turns.

Similarly to a configuration in Fig. 1, the speed estimation portion 4 estimates, based on the induced voltage generated in each of the plurality of detection coils 3, the moving speed of the relative moving body 6.

Among the three excitation coils 2 in Fig. 7, the central one and one on the left are connected so that a magnetic flux generated by the central one and a magnetic flux generated by the one on the left are directed in opposite directions to each other. Thus, on the left side with respect to the excitation coil 2 on the left, the magnetic flux generated by the central one of the excitation coils 2 and the magnetic flux generated by the excitation coil 2 on the left are directed in opposite directions to each other and thus cancel out each other, while on the right side with respect to the excitation coil 2 on the left, the magnetic flux generated by the central one of the excitation coils 2 and the magnetic flux generated by the excitation coil 2 on the left are directed in the same direction and thus strengthen each other. Similarly, also regarding the central one of the excitation coils 2 and the excitation coil 2 on the right, on the right side with respect to the excitation coil 2 on the right, magnetic fluxes generated by these excitation coils 2 cancel out each other, and on the left side with respect to the excitation coil 2 on the right, magnetic fluxes generated by these excitation coils 2 strengthen each other. Thus, it is possible to concentrate magnetic fluxes at the center of the speed detecting device 1 and thus to suppress stray magnetic fields on both sides of the speed detecting device 1. A degree of a copper loss in the excitation coil 2 in Fig. 6 is comparable with a degree of a copper loss in the excitation coils 2 in Fig. 8.

The two detection coils 3 are provided so as to surround the excitation coils 2 on the left and right, respectively. In Fig. 7, a broken line indicates a path along which a magnetic flux passes, the magnetic flux corresponding to an alternating current flowing through each of the excitation coils 2, and an alternate long and short dashed line indicates a path along which a magnetic flux passes, the magnetic flux being produced by an eddy current generated on the relative moving body 6 so as to corresponding to the moving speed of the relative moving body 6.

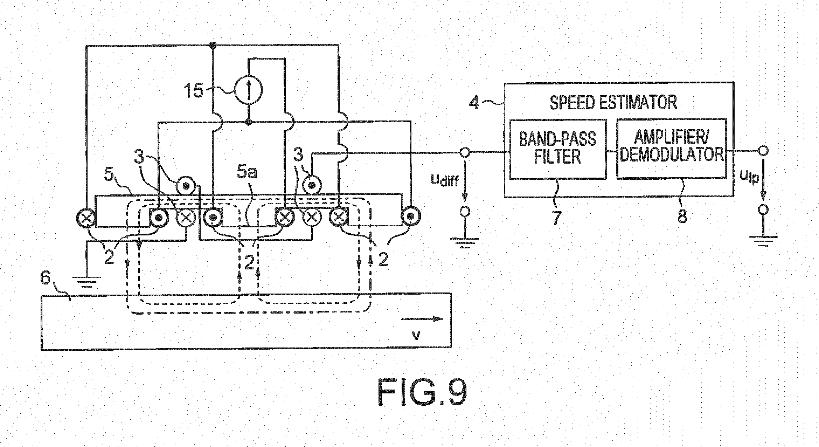

Arrangements of the excitation coils 2 and the detection coils 3, which can suppress a stray magnetic field, are not necessarily limited to the arrangements shown in Fig. 7. Fig. 9 is a view showing a speed detecting device 1 according to a first modification example of the configuration in Fig. 7. In the speed detecting device 1 in FIG. 9, two detection coils 3 are wound in a direction different from that in Fig. 7. In Fig. 9, a yoke 5 includes three convex portions 5a, and an excitation coil 2 is wound on each of the convex portions 5a. A body portion of the yoke 5 has a second width narrower than a first width thereof corresponding to a width of each of the convex portions 5a, and the two detection coils 3 are wound on this body portion.

In the speed detecting device 1 in Fig. 9, the body portion of the yoke 5 is formed to have a thickness reduced to such an extent that magnetic fluxes are not saturated therein, and thus it is possible to increase the number of turns of the detection coils 3 without increasing a size of the detection coils 3. This can improve detection sensitivity, and thus a change in moving speed of the relative moving body 6 can be sensitively detected. As a result, a current in each of the excitation coils can be reduced, and power consumption can also be reduced.

As shown in each of the speed detecting devices 1 in Fig. 7 and Fig. 9, suppressing a stray magnetic field requires three or more excitation coils 2 and two or more detection coils 3, rendering a configuration of the speed detecting device 1 complicated. From this viewpoint, a further simplified configuration of the speed detecting device 1 is also conceivable, though a resulting effect of suppressing a stray magnetic field is somewhat decreased.

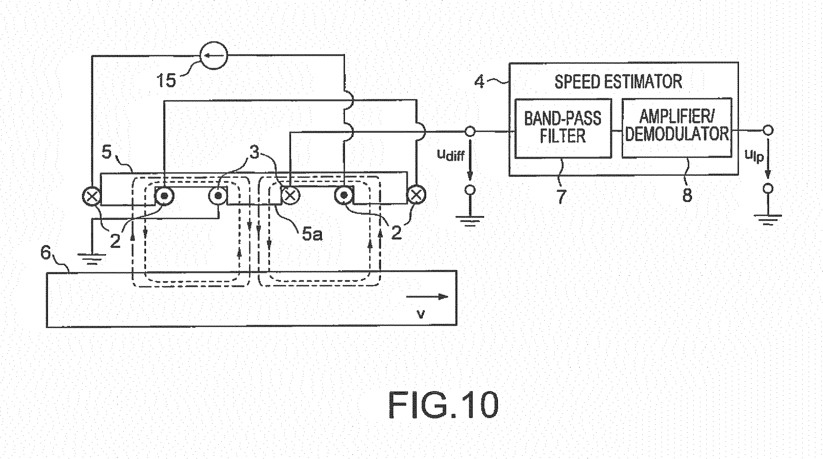

Fig. 10 is a view showing, as a first example not corresponding to the claimed invention, a further simplified configuration of the speed detecting device 1 in Fig. 7. A speed detecting device 1 in Fig. 10 has a configuration in which a yoke 5 is provided with three convex portions 5a, and a detection coil 3 is wound on a central one of the three convex portions 5a, while excitation coils 2 are wound on the two convex portions 5a on both sides of the central one of the three convex portions 5a, respectively. Furthermore, magnetic fluxes generated by the excitation coils 2 on the left and right, respectively, are directed in opposite directions to each other. The excitation coils 2 on the left and right generate magnetic fluxes in a spreading manner, and on the outside of the speed detecting device 1, magnetic fluxes generated by the excitation coils on the left and right are directed in opposite directions to each other, thus acting in such directions as to weaken each other. It is, therefore, possible to suppress spreading of a stray magnetic field to the outside of the speed detecting device 1.

Furthermore, magnetic fluxes linked with the detection coil 3 are directed opposite, and thus the detection coil 3 can cancel out the magnetic fluxes generated by alternating currents iinj flowing through the excitation coils 2 on the left and right. A magnetic flux produced by an eddy current generated on a relative moving body 6 as a result of movement of the relative moving body 6 is linked with the detection coil 3, and thus an induced voltage is generated in the detection coil 3. Therefore, by using the single detection coil 3 alone, it is possible to detect only a magnetic flux produced by an eddy current generated on the relative moving body 6 as a result of movement of the relative moving body 6 and thus to estimate a moving speed of the relative moving body 6.

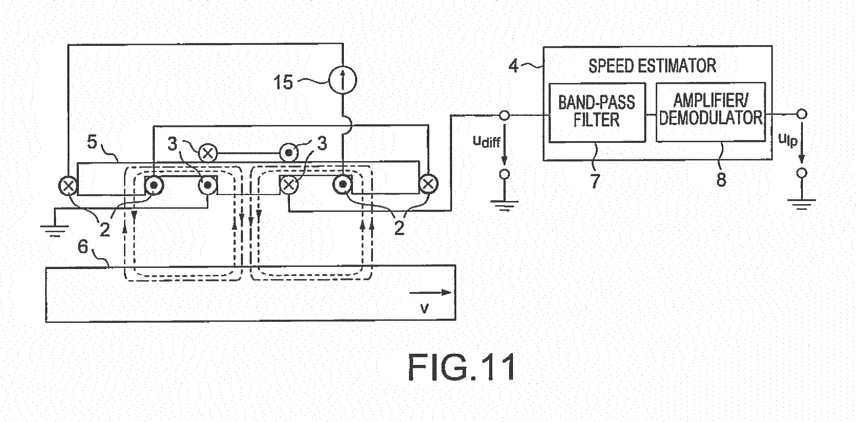

Fig. 11 is a view showing, as a second example not corresponding to the claimed invention, a further simplified configuration of the speed detecting device 1 in Fig. 7. A speed detecting device 1 in FIG. 11 is different from the configuration in Fig. 10 in that two detection coils 3 are provided and wound on a body portion of a yoke 5. Each of the detection coils 3 has a magnetic flux linked therewith, the magnetic flux being generated by a corresponding one of excitation coils 2. In a state where a relative moving body 6 is stopped, magnetic fluxes linked with the detection coils 3, respectively, are equal in magnitude to each other, so that induced voltage generated in the detection coils 3, respectively, are also equal in level to each other and thus are cancelled out, resulting in a speed being estimated to be zero. On the other hand, in a case where the relative moving body 6 moves, magnetic fluxes linked with the detection coils 3, respectively, are different in magnitude from each other, so that induced voltage generated in the detection coils 3, respectively, are also different from each other. Based on a difference voltage udiff between these induced voltages, a speed estimation portion 4 estimates the speed.

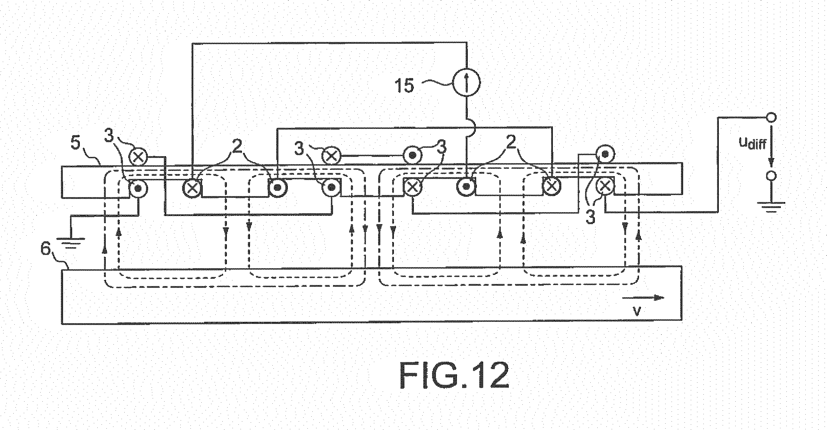

Fig. 12 is a view showing one modification example of the configuration in Fig. 11; also this example is not corresponding to the claimed invention. In a speed detecting device 1 in FIG. 12, the number of detection coils 3 is increased compared with the configuration in Fig. 11. More specifically, in addition to the configuration in Fig. 11, two detection coils 3 are additionally provided at both end portions of a yoke 5 in a longitudinal direction thereof. By additionally providing the two detection coils 3 on both sides of the yoke 5 in the longitudinal direction, magnetic fluxes traveling outward from excitation coils 2 on the left and right can be linked with the detection coils 3 on both sides, and thus the magnetic fluxes are less likely to be spread to an outer side beyond the yoke 5.

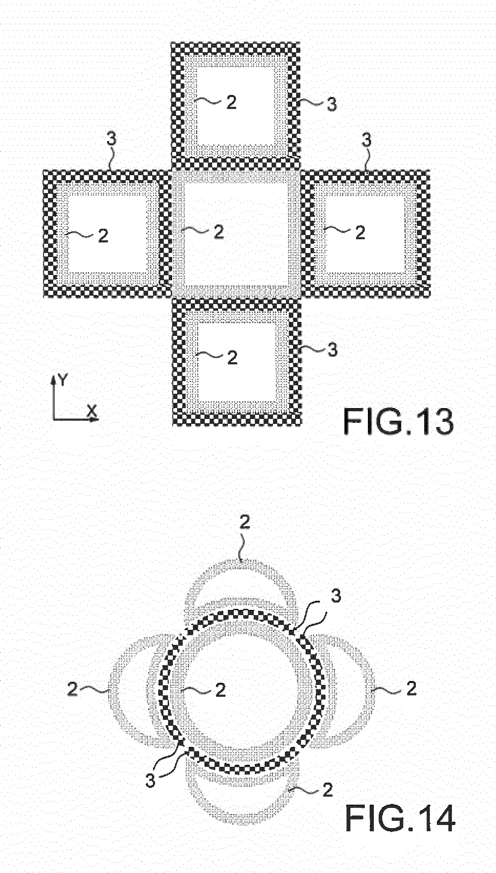

<Suppression of Stray Magnetic Field to Two-dimensional Direction> While the foregoing has mainly described suppression of a stray magnetic field to a one-dimensional direction, the present invention is applicable also to a speed detecting device 1 intended to achieve suppression of a stray magnetic field to a two-dimensional direction. Fig. 13 is a schematic plan view, as seen from above, of the speed detecting device 1 according to the embodiment of the present invention. Fig. 13 is a plan view of, for example, the speed detecting device 1 in Fig. 7. One excitation coil 2 is disposed in the center, and other excitation coils 2 are disposed on both sides of that excitation coil 2 in a first direction X and on both sides thereof in a second direction Y intersecting the first direction X. Furthermore, a detection coil 3 is disposed so as to surround each of the excitation coils 2 other than the excitation coil 2 in the center. In the speed detecting device 1 in Fig. 13, stray magnetic fields traveling in four directions from the excitation coils 2 can be suppressed.

While the coils are formed in a rectangular shape in Fig. 13, a shape and a size of the coils are arbitrary. For example, Fig. 14 shows an example in which an excitation coil 2 in the center is formed in an annular shape and excitation coils 2 around that excitation coil 2 are formed in a crescent shape. A detection coil 3 also formed in a crescent shape may be disposed on the inside of each of the excitation coils 2 around the excitation coil 2 in the center. The detection coils 3 in Fig. 14 are different from those in Fig. 13 in that the detection coils 3 are each disposed between any adjacent two of the excitation coils 2 in a direction different by substantially 90 degrees from a winding direction of the excitation coils 2.

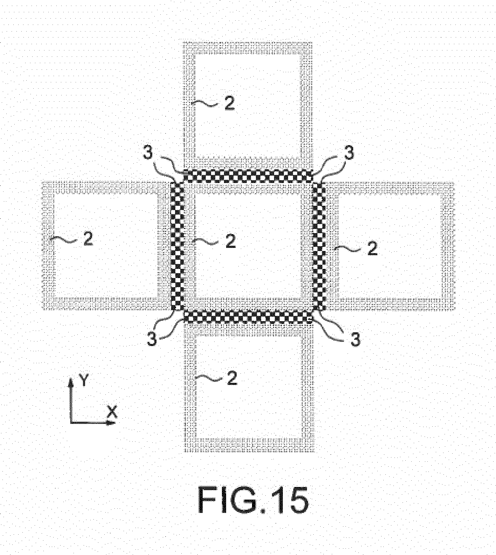

Fig. 15 is a plan view showing a case where the speed detecting device 1 in Fig. 9 is disposed in a two-dimensional direction. Similarly to the configuration in Fig. 14, detection coils 3 in Fig. 15 are different from those in Fig. 13 in that the detection coils 3 are each disposed between any adjacent two of excitation coils 2 in a direction different by substantially 90 degrees from a winding direction of the excitation coils 2. The two-dimensional arrangements shown in Fig. 13 to Fig. 15 are applicable to any of the speed detecting devices 1 shown in Fig. 7 and Fig. 9 to Fig. 12.

<Resonance Operation> Equivalently, the excitation coil 2 is an R-L series circuit. In order to excite a magnetic field in the gap and on the surface of the relative moving body 6, it is required that active power and reactive power be supplied to the excitation coil 2. Furthermore, it is desirable to use a sinusoidal current as the alternating current iinj to be passed through the excitation coil 2. The reason for this is that when a harmonic component is included in the alternating current iinj, the harmonic component is superimposed on induced voltages induced in the detection coils 3, acting as a noise component, and thus should be eliminated at the speed estimation portion 4.

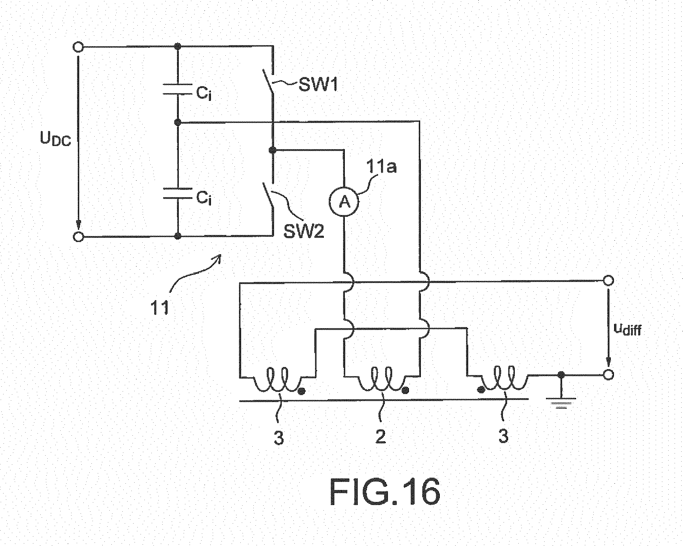

In view of the above, a resonance circuit (a first resonance circuit) 11 having the excitation coil 2 may be provided inside the speed detecting device 1. Fig. 16 is a circuit diagram showing one example of the resonance circuit 11. The resonance circuit 11 in Fig. 16 not only compensates for reactive power but also excites a sinusoidal current while minimizing a switching loss.

The resonance circuit 11 in Fig. 16 has two capacitors Ci connected in series between direct voltage terminals to which a direct voltage is supplied and two switches SW1 and SW2 also connected in series between the direct voltage terminals. One end of the excitation coil 2 is connected to a connection node between the capacitors Ci, and the other end of the excitation coil 2 is connected to a connection node between the switches SW1 and SW2 via an ammeter 11a.

The switches SW1 and SW2 in Fig. 16 are turned on/off alternately so as to correspond to a resonance frequency of the resonance circuit 11. Fig. 16 omits a circuit that switches on/off of the switches SW1 and SW2. In Fig. 16, a frequency of the alternating current iinj flowing through the excitation coil 2 is a resonance frequency of the resonance circuit 11.

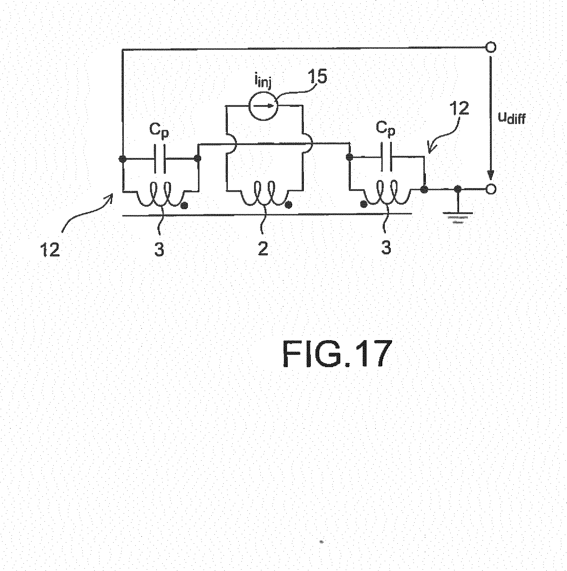

Fig. 17 is a view in which in addition to a circuit configuration in Fig. 16, the detection coils 3 are each also formed in a resonance circuit configuration. In Fig. 17, a capacitor Cp is connected in parallel to each of the two detection coils 3. Each of the detection coils 3 and the capacitor Cp are connected in parallel to each other, thus constituting a resonance circuit (a second resonance circuit) 12. An inductance of each of the detection coils 3 and the capacitor Cp connected thereto are set in advance so that an excitation current frequency of the excitation coil 2 and a resonance frequency of the resonance circuit 12 agree with each other, and thus detection sensitivity with respect to respective induced voltages in the detection coils 3 having a frequency equal to the excitation current frequency used for speed estimation can be increased, so that it is possible to suppress detection of disturbance noise having a frequency different from the resonance frequency.

There is no particular limitation on a range to which the speed detecting device 1 according to this embodiment is applied. In a case, however, where the speed detecting device 1 according to this embodiment is used to detect, for example, a speed of a train, it is required to prevent a detection result from being affected by noise caused by vibrations of the train. It is desirable to check beforehand an average vibration frequency band of the train and set a resonance frequency of the resonance circuit 11 in Fig. 16 or the resonance circuit 12 in Fig. 17 to a frequency uncorrelated with this frequency band. By using the term "uncorrelated," it is intended that the resonance frequency be set so as not to overlap with not only a vibration frequency of the train but also a harmonic frequency thereof. Alternatively, as will be mentioned later, a configuration may be adopted in which environmental noise is detected at all times by an unshown environmental noise detection portion, and the resonance frequency of each of the resonance circuits 11 and 12 is set to a frequency uncorrelated with a frequency of the noise thus detected.

Furthermore, it is desirable that the alternating current iinj to be passed through the excitation coil 2 is set to have a most ideal possible sinusoidal waveform so that a harmonic component of the alternating current iinj is prevented from being superimposed on induced voltages induced in the detection coils 3. The alternating current iinj can be set to have an ideal sinusoidal waveform by using the resonance circuit 11 in Fig. 16.

The speed detecting device 1 according to this embodiment may be provided with both or either of the resonance circuit 11 in Fig. 16 and the resonance circuit 12 in Fig. 17. These resonance circuits 11 and 12 are applicable to any of the above-mentioned speed detecting devices 1 shown in Fig. 1, Fig. 3, Fig. 5A, Fig. 5B, Fig. 7, and Fig. 9 to Fig. 15.

<Intermittent Driving of Excitation Coil 2> In the speed detecting device 1 according to this embodiment, it is desirable to take measures against three types of losses in total, which are a core loss in the yoke 5, a copper loss in the excitation coil 2, and an eddy current loss on the relative moving body 6. The core loss in the yoke 5 can be minimized by using a low-loss yoke material such as ferrite, iron powder, or a laminated steel plate. On the other hand, the copper loss in the excitation coil 2 and the eddy current loss on the relative moving body 6 are essential elements of the speed detecting device 1 and thus are inevitable. In particular, as the gap increases in size, a current required for the exciting coil 2 increases, and the copper loss in the exciting coil 2 also increases. This may result in difficulty in applying to a case where the speed of the relative moving body 6 with a large gap is estimated by utilizing a battery power source.

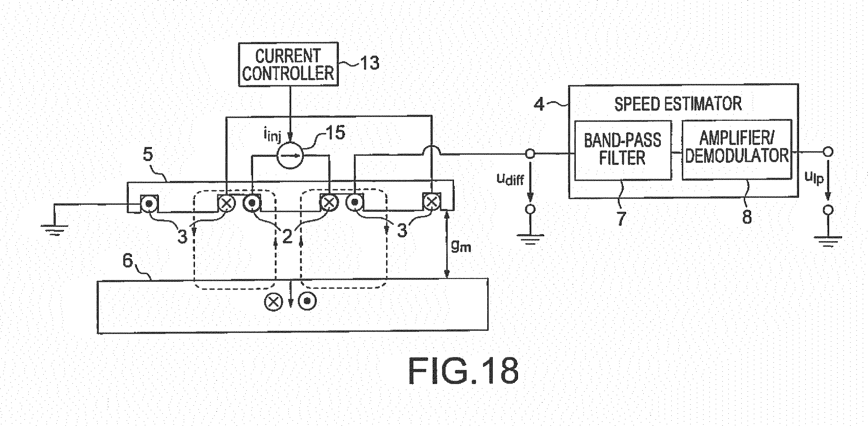

As one technique for reducing power consumption of the speed detecting device 1, the excitation coil 2 may be driven intermittently. Fig. 18 is a view showing a speed detecting device 1 obtained by adding a current control portion 13 to the configuration in Fig. 1. The current control portion 13 alternately provides a first period in which a current is passed through the excitation coil 2 and a second period in which no current is passed therethrough. The speed estimation portion 4 estimates the moving speed of the relative moving body 6, and the first period is set so that it is equal to or longer than a length of time required for the speed estimation portion 4 to estimate the moving speed of the relative moving body 6.

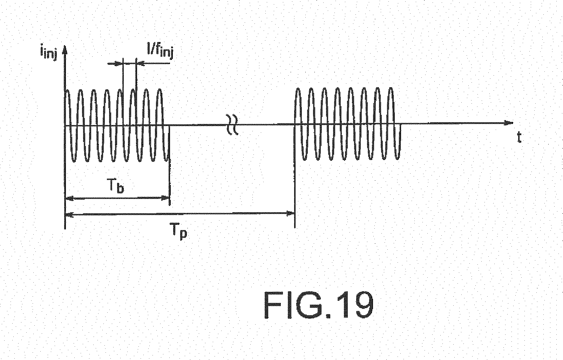

Fig. 19 is a waveform diagram of the alternating current iinj flowing through the excitation coil 2. The alternating current iinj is an intermittent current having a cycle Tp. The current control portion 13 passes the alternating current iinj having a predetermined frequency through the excitation coil 2 only during a first period Tb within the cycle Tp. Immediately after a start of the first period Tb, overshoot or undershoot might occur in a current waveform, rendering an alternating current waveform unstable. For this reason, the moving speed of the relative moving body 6 may be estimated after a lapse of a predetermined time from the start of the first period Tb (in a period Tc in Fig. 19).

The current control portion 13 in Fig. 18 is applicable to any of the above-mentioned speed detecting devices 1 shown in Fig. 1, Fig. 3, Fig. 5A, Fig. 5B, Fig. 7, and Fig. 9 to Fig. 17.

As thus described, in this embodiment, in a state where a magnetic flux is generated on the relative moving body 6 by the alternating current iinj flowing through the excitation coil 2, the relative moving body 6 is caused to move. A magnetic flux produced by an eddy current newly generated as a result of movement of the relative moving body 6 is linked with the detection coils 3 so that induced voltages are induced in the detection coils 3. Based on these induced voltages, the moving speed of the relative moving body 6 is estimated. Furthermore, in this embodiment, arrangements of the excitation coil 2 and the detection coils 3 are designed so as to prevent a magnetic flux generated by the excitation coil 2 from spreading to the outside of the speed detecting device 1. Thus, magnetic efficiency can be improved by suppressing a stray magnetic field, so that it is possible to accurately estimate the moving speed of the relative moving body 6 while achieving low power consumption.

Furthermore, the excitation coils 2 and the detection coils 3 are disposed in a two-dimensional direction as shown in Fig. 13 and Fig. 15, and thus spreading of a stray magnetic field to the two-dimensional direction can be suppressed.

Moreover, the excitation coil 2 is formed in a configuration of the resonance circuit 11, and thus a power source voltage for passing an excitation current (an alternating current) can be reduced to a low level, so that a high voltage generation circuit for an excitation current is no longer needed. Furthermore, a reduced number of times of switching allows an excitation current to have a sinusoidal waveform. Furthermore, the detection coils 3 are each formed in a configuration of the resonance circuit 12, and thus a frequency component other than a resonance frequency can be suppressed, so that an S/N ratio can be improved. Furthermore, respective induced voltages in the detection coils 3 can be detected even with the use of a small excitation current, and thus it is possible to achieve improved detection sensitivity and reduced power consumption.

Furthermore, the alternating current iinj flowing through the excitation coil 2 is set to have a sinusoidal waveform, and thus a harmonic component of the alternating current iinj is prevented from being included in induced voltages induced in the detection coils 3, so that the moving speed of the relative moving body 6 can be accurately estimated.

Moreover, the alternating current iinj is supplied intermittently to the excitation coil 2, and thus power consumption of the speed detecting device 1 can be reduced.

A concept of the above-mentioned relative moving body 6 in this embodiment includes not only a relative moving body that itself moves or rotates but also a relative moving body that moves relative to the speed detecting device 1. Therefore, in this embodiment, in a case where the speed detecting device 1 is installed in a train or the like, a fixture such as a rail that moves relative to the train or the like is also construed as being included in the concept of the relative moving body 6. The moving body 6 in this embodiment is a conductor.

## Claims

1. A speed detecting device (1), comprising:
three neighboring excitation coils (2) adapted to generate magnetic fluxes corresponding to alternating current (iᵢₙⱼ) and having a central excitation coil and the other excitation coils at both sides of the central excitation coil, with the three excitation coils (2) being disposed along a first direction (X), adapted to determine a moving speed of a conductive relative moving body (6) movable along said first direction (X), and a winding direction of the central excitation coil being opposite to a winding direction of the other excitation coils;
a current source (15), wherein the speed detecting device (1) is arranged such that alternating current (iᵢₙⱼ) is flowing from the current source (15) to the central excitation coil, from the central excitation coil via the other excitation coils, which are connected electrically in parallel, and then back to the current source (15);
a plurality of detection coils (3), each of the plurality of detection coils (3) generating an induced voltage corresponding to magnetic flux produced by an eddy current generated on the conductive relative moving body (6), the eddy current being generated so as to correspond to the moving speed of the relative moving body (6) moving through the magnetic fluxes generated by the alternating current (iᵢₙⱼ) flowing through the three excitation coils (2); and
a speed estimation portion (4) for estimating, based on the induced voltage generated in each of the plurality of detection coils (3), the moving speed of the relative moving body (6),
wherein the three excitation coils (2) and the plurality of detection coils (3) are disposed so that magnetic fluxes generated by the alternating current (iᵢₙⱼ) flowing through the three excitation coils (2) are linked with at least two of the plurality of detection coils (3), which are placed such that they experience the same magnetic flux when the relative moving body (6) is stopped, but different magnetic fluxes when the relative moving body (6) is moving, and
wherein the speed detecting device (1) is arranged such that the moving speed is determined from a difference between the induced voltages of the two detection coils (3).

2. The speed detecting device (1) according to claim 1, further comprising:
a yoke (5) for passing therethrough the magnetic fluxes generated by the alternating current (iᵢₙⱼ) flowing through the three excitation coils (2),
wherein the three excitation coils (2) and the plurality of detection coils (3) are disposed along a surface of the yoke (5).

3. The speed detecting device (1) according to claim 2, wherein
at least one of the three excitation coils (2) and the plurality of detection coils (3) is wound on the yoke (5).

4. The speed detecting device (1) according to claim 3, wherein
the axes of the three excitation coils (2) wound on the yoke (5) are disposed along a direction orthogonal to the first direction (X), while the axes of the two detection coils (3) wound on the yoke (5) are disposed parallel to the first direction (X).

5. The speed detecting device (1) according to claim 2 or 3, wherein
the axes of the three excitation coils (2) are disposed along a direction orthogonal to the first direction (X), and the two detection coils (3) are disposed along the first direction (X) and surround the other excitation coils (2).

6. The speed detecting device (1) according to any one of claims 1 to 5, further comprising:
a current control portion adapted to alternately provide a first period in which a current is passed through the three excitation coils (2) and a second period in which no current is passed therethrough and to set the first period to be equal to or longer than a length of time required for the speed estimation portion (4) to estimate the moving speed of the relative moving body (6).

7. The speed detecting device (1) according to claim 6, wherein
the speed estimation portion (4) is adapted to estimate the moving speed of the relative moving body (6) after a lapse of a predetermined time from a start of the first period.

8. The speed detecting device (1) according to any one of claims 1 to 7, wherein
the alternating current (iᵢₙⱼ) is passed through the three excitation coils (2) so that a magnetic flux linked with a central one of the three excitation coils (2) is concentrated, and magnetic fluxes traveling outward from the three excitation coils (2) other than the central one cancel out each other,
the first to third excitation coils (2) are disposed sequentially along the first direction (X),
a direction of a magnetic flux generated by the first excitation coil (2) is opposite to a direction of a magnetic flux generated by the second excitation coil (2),
a direction of a magnetic flux generated by the third excitation coil (2) is opposite to the direction of the magnetic flux generated by the second excitation coil (2),
in a reverse direction to the first direction (X) with respect to the first excitation coil (2), the magnetic flux of the first excitation coil (2) and the magnetic flux of the second excitation coil (2) cancel out each other,
in the first direction (X) with respect to the first excitation coil (2), the magnetic flux of the first excitation coil (2) and the magnetic flux of the second excitation coil (2) strengthen each other,
in the first direction (X) with respect to the third excitation coil (2), the magnetic flux of the second excitation coil (2) and the magnetic flux of the third excitation coil (2) cancel out each other, and
on a reverse side to the first direction (X) with respect to the third excitation coil (2), the magnetic flux of the second excitation coil (2) and the magnetic flux of the third excitation coil (2) strengthen each other.

9. A stray magnetic field suppressing method, comprising steps of:
allowing three neighboring excitation coils (2) to generate magnetic fluxes by passing alternating current (iᵢₙⱼ) from a current source (15) to a central excitation coil (2), from the central excitation coil via the other excitation coils, which are connected electrically in parallel, and then back to the current source (15);
generating, by using a plurality of detection coils (3), induced voltages each corresponding to a magnetic flux produced by an eddy current generated on a conductive relative moving body (6), the eddy current being generated so as to correspond to a moving speed of the relative moving body (6) moving through the magnetic fluxes generated by the alternating current (iᵢₙⱼ) flowing through the three excitation coils (2);
causing magnetic fluxes generated by the alternating current (iᵢₙⱼ) flowing through the three excitation coils (2) to be linked with at least two of the plurality of detection coils (3), which are placed such that they experience the same magnetic flux when the relative moving body (6) is stopped, but different magnetic fluxes when the relative moving body (6) is moving; and
determining the moving speed from a difference between the induced voltages of the two detection coils (3).

## Patentansprüche

1. Geschwindigkeitserfassungs-Vorrichtung (1), die umfasst:
drei benachbarte Erregerspulen (2), die so angepasst sind, dass sie Wechselstrom (iᵢₙⱼ) entsprechende Magnetflüsse erzeugen, und die eine mittlere Erregerspule sowie die anderen Erregerspulen an beiden Seiten der mittleren Erregerspule aufweisen, wobei die drei Erregerspulen (2) in einer ersten Richtung (X) angeordnet sind, so angepasst sind, dass sie eine Bewegungsgeschwindigkeit eines leitenden, sich relativ bewegenden Körpers (6) bestimmen, der in der ersten Richtung (X) bewegt werden kann, und eine Wicklungsrichtung der mittleren Erregerspule einer Wicklungsrichtung der anderen Erregerspulen entgegengesetzt ist;
eine Stromquelle (15), wobei die Geschwindigkeitserfassungs-Vorrichtung (1) so eingerichtet ist, dass Wechselstrom (iᵢₙⱼ) von der Stromquelle (15) zu der mittleren Erregerspule, von der mittleren Erregerspule über die anderen Erregerspulen, die elektrisch parallel geschaltet sind, und dann zurück zu der Stromquelle (15) fließt;
eine Vielzahl von Erfassungsspulen (3), wobei jede der Vielzahl von Erfassungsspulen (3) eine induzierte Spannung erzeugt, die Magnetfluss entspricht, der durch einen an dem leitenden, sich relativ bewegenden Körper (6) erzeugten Wirbelstrom produziert wird, wobei der Wirbelstrom so erzeugt wird, dass er der Bewegungsgeschwindigkeit des sich relativ bewegenden Körpers (6) entspricht, der sich durch die von dem durch die drei Erregerspulen (2) hindurch fließenden Wechselstrom (iᵢₙⱼ) erzeugten Magnetflüsse hindurch bewegt; und
einen Geschwindigkeitsschätzungs-Abschnitt (4), mit dem auf Basis der in jeder der Vielzahl von Erfassungsspulen (3) erzeugten induzierten Spannung die Bewegungsgeschwindigkeit des sich relativ bewegenden Körpers (6) geschätzt wird,
wobei die drei Erregerspulen (2) und die Vielzahl von Erfassungsspulen (3) so angeordnet sind, dass durch den durch die drei Erregerspulen (2) hindurch fließenden Wechselstrom (iᵢₙⱼ) erzeugte Magnetflüsse mit wenigstens zwei der Vielzahl von Erfassungsspulen (3) zusammenhängen, die so positioniert sind, dass sie, wenn der sich relativ bewegende Körper (6) angehalten wird, den gleichen Magnetfluss erfahren, jedoch unterschiedliche Magnetflüsse erfahren, wenn sich der sich relativ bewegende Körper (6) bewegt, und
die Geschwindigkeitserfassungs-Vorrichtung (1) so eingerichtet ist, dass die Bewegungsgeschwindigkeit anhand einer Differenz zwischen den induzierten Spannungen der zwei Erfassungsspulen (3) bestimmt wird.

2. Geschwindigkeitserfassungs-Vorrichtung (1) nach Anspruch 1, die des Weiteren umfasst:
ein Joch (5), durch das die von dem durch die drei Erregerspulen (2) hindurch fließenden Wechselstrom (iᵢₙⱼ) erzeugten Magnetflüsse hindurchgeleitet werden,
wobei die drei Erregerspulen (2) und die Vielzahl von Erfassungsspulen (3) entlang einer Oberfläche des Jochs (5) angeordnet sind.

3. Geschwindigkeitserfassungs-Vorrichtung (1) nach Anspruch 2, wobei
wenigstens eine der drei Erregerspulen (2) und der Vielzahl von Erfassungsspulen (3) auf das Joch (5) gewickelt ist.

4. Geschwindigkeitserfassungs-Vorrichtung (1) nach Anspruch 3, wobei
die Achsen der auf das Joch (5) gewickelten drei Erregerspulen (2) in einer Richtung orthogonal zu der ersten Richtung (X) angeordnet sind, während die Achsen der auf das Joch (5) gewickelten zwei Erfassungsspulen (3) parallel zu der ersten Richtung (X) angeordnet sind.

5. Geschwindigkeitserfassungs-Vorrichtung (1) nach Anspruch 2 oder 3, wobei
die Achsen der drei Erregerspulen (2) in einer Richtung orthogonal zu der ersten Richtung (X) angeordnet sind, und die zwei Erfassungsspulen (3) in der ersten Richtung (X) angeordnet sind und die anderen Erregerspulen (2) umgeben.

6. Geschwindigkeitserfassungs-Vorrichtung (1) nach einem der Ansprüche 1 bis 5, die des Weiteren umfasst:
einen Stromsteuerungs-Abschnitt, der so angepasst ist, dass er abwechselnd eine erste Periode, in der ein Strom durch die drei Erregerspulen (2) hindurch geleitet wird, und eine zweite Periode erzeugt, in der kein Strom durch sie hindurch geleitet wird, und die erste Periode so einstellt, dass sie genauso lang ist wie oder länger als eine Zeitdauer, die der Geschwindigkeitsschätzungs-Abschnitt (4) benötigt, um die Bewegungsgeschwindigkeit des sich relativ bewegenden Körpers (6) zu schätzen.

7. Geschwindigkeitserfassungs-Vorrichtung (1) nach Anspruch 6, wobei
der Geschwindigkeitsschätzungs-Abschnitt (4) so eingerichtet ist, dass er die Bewegungsgeschwindigkeit des sich relativ bewegenden Körpers (6) nach Ablauf einer vorgegebenen Zeit von einem Beginn der ersten Periode an schätzt.

8. Geschwindigkeitserfassungs-Vorrichtung (1) nach einem der Ansprüche 1 bis 7, wobei
der Wechselstrom (iᵢₙⱼ) durch die drei Erregerspulen (2) so hindurchgeleitet wird, dass ein Magnetfluss, der mit einer mittleren der drei Erregerspulen (2) zusammenhängt, konzentriert wird und sich die Magnetflüsse, die von den anderen der drei Erregerspulen (2) als der mittleren ausgehen, einander aufheben,
die erste bis dritte Erregerspule (2) in der ersten Richtung (X) aufeinanderfolgend angeordnet sind,
eine Richtung eines von der ersten Erregerspule (2) erzeugten Magnetflusses entgegengesetzt zu einer Richtung eines von der zweiten Erregerspule (2) erzeugten Magnetflusses ist,
eine Richtung eines von der dritten Erregerspule (2) erzeugten Magnetflusses entgegengesetzt zu der Richtung des von der zweiten Erregerspule (2) erzeugten Magnetflusses ist,
in einer zu der ersten Richtung (X) umgekehrten Richtung in Bezug auf die erste Erregerspule (2) der Magnetfluss der ersten Erregerspule (2) und der Magnetfluss der zweiten Erregerspule (2) einander aufheben,
in der ersten Richtung (X) in Bezug auf die erste Erregerspule (2) der Magnetfluss der ersten Erregerspule (2) und der Magnetfluss der zweiten Erregerspule (2) einander verstärken,
in der ersten Richtung (X) in Bezug auf die dritte Erregerspule (2) der Magnetfluss der zweiten Erregerspule (2) und der Magnetfluss der dritten Erregerspule (2) einander aufheben, und
an einer zu der ersten Richtung (X) entgegengesetzt liegenden Seite in Bezug auf die dritte Erregerspule (2) der Magnetfluss der zweiten Erregerspule (2) und der Magnetfluss der dritten Erregerspule (2) einander verstärken.

9. Verfahren zum Unterdrücken magnetischer Streufelder, das die folgenden Schritte umfasst:
Zulassen, dass drei benachbarte Erregerspulen (2) Magnetflüsse erzeugen, indem Wechselstrom (iᵢₙⱼ) von einer Stromquelle (15) einer mittleren Erregerspule (2), von der mittleren Erregerspule über die anderen Erregerspulen, die elektrisch parallel geschaltet sind, und dann zurück zu der Stromquelle (15) geleitet wird;
Erzeugen induzierter Spannungen, die jeweils einem Magnetfluss entsprechen, der durch einen an einem leitenden, sich relativ bewegenden Körper (6) erzeugten Wirbelstrom produziert wird, unter Einsatz einer Vielzahl von Erfassungsspulen (3), wobei der Wirbelstrom so erzeugt wird, dass er einer Bewegungsgeschwindigkeit des sich relativ bewegenden Körpers (6) entspricht, der sich durch die von dem durch die drei Erregerspule (2) hindurch fließenden Wechselstrom (iᵢₙⱼ) erzeugten Magnetflüsse hindurch bewegt;
Veranlassen, dass die durch den durch die drei Erregerspulen (2) hindurch fließenden Wechselstrom (iᵢₙⱼ) erzeugten Magnetflüsse mit wenigstens zwei der Vielzahl von Erfassungsspulen (3) zusammenhängen, die so positioniert sind, dass sie, wenn der sich relativ bewegende Körper (6) angehalten wird, den gleichen Magnetfluss erfahren, jedoch unterschiedliche Magnetflüsse erfahren, wenn sich der sich relativ bewegende Körper (6) bewegt, und
Bestimmen der Bewegungsgeschwindigkeit anhand einer Differenz zwischen den induzierten Spannungen der zwei Erfassungsspulen (3).

## Revendications

1. Dispositif de détection de vitesse (1), comprenant :
trois bobines d'excitation (2) voisines adaptées pour générer des flux magnétiques correspondant à un courant alternatif (iᵢₙⱼ) et présentant une bobine d'excitation centrale et les autres bobines d'excitation des deux côtés de la bobine d'excitation centrale, les trois bobines d'excitation (2) étant disposées le long d'une première direction (X), adaptées pour déterminer une vitesse de déplacement d'un corps conducteur en mouvement relatif (6) pouvant se déplacer le long de ladite première direction (X), et une direction d'enroulement de la bobine d'excitation centrale étant opposé à une direction d'enroulement des autres bobines d'excitation ;
une source de courant (15), dans lequel le dispositif de détection de vitesse (1) est agencé de sorte qu'un courant alternatif (iᵢₙⱼ) circule à partir de la source de courant (15) vers la bobine d'excitation centrale, à partir de la bobine d'excitation centrale via les autres bobines d'excitation, qui sont connectées électriquement en parallèle, et ensuite renvoyé à la source de courant (15) ;
une pluralité de bobines de détection (3), chacune de la pluralité de bobines de détection (3) générant une tension induite correspondant au flux magnétique produit par un courant de Foucault généré sur le corps conducteur en mouvement relatif (6), le courant de Foucault étant généré de manière à correspondre à la vitesse de déplacement du corps en mouvement relatif (6) se déplaçant à travers les flux magnétiques générés par le courant alternatif (iᵢₙⱼ) circulant à travers les trois bobines d'excitation (2) ; et
une partie d'estimation de vitesse (4) pour estimer, sur la base de la tension induite générée dans chacune de la pluralité de bobines de détection (3), la vitesse de déplacement du corps en mouvement relatif (6),
dans lequel les trois bobines d'excitation (2) et la pluralité de bobines de détection (3) sont disposées de sorte que les flux magnétiques générés par le courant alternatif (iᵢₙⱼ) circulant à travers les trois bobines d'excitation (2) sont liés à au moins deux de la pluralité de bobines de détection (3), qui sont placées de telle sorte qu'elles subissent le même flux magnétique quand le corps en mouvement relatif (6) est à l'arrêt, mais des flux magnétiques différents quand le corps en mouvement relatif (6) est en mouvement, et
dans lequel le dispositif de détection de vitesse (1) est agencé de sorte que la vitesse de déplacement est déterminée à partir d'une différence entre les tensions induites des deux bobines de détection (3).

2. Dispositif de détection de vitesse (1) selon la revendication 1, comprenant en outre :
une culasse (5) pour faire passer à travers celle-ci les flux magnétiques générés par le courant alternatif (iᵢₙⱼ) circulant à travers les trois bobines d'excitation (2),
dans lequel les trois bobines d'excitation (2) et la pluralité de bobines de détection (3) sont disposées le long d'une surface de la culasse (5).

3. Dispositif de détection de vitesse (1) selon la revendication 2, dans lequel
au moins une des trois bobines d'excitation (2) et de la pluralité de bobines de détection (3) est enroulée sur la culasse (5).

4. Dispositif de détection de vitesse (1) selon la revendication 3, dans lequel
les axes des trois bobines d'excitation (2) enroulées sur la culasse (5) sont disposés le long d'une direction orthogonale à la première direction (X), tandis que les axes des deux bobines de détection (3) enroulées sur la culasse (5) sont disposés parallèlement à la première direction (X).

5. Dispositif de détection de vitesse (1) selon la revendication 2 ou 3, dans lequel
les axes des trois bobines d'excitation (2) sont disposés le long d'une direction orthogonale à la première direction (X), et les deux bobines de détection (3) sont disposées le long de la première direction (X) et entourent les autres bobines d'excitation (2).

6. Dispositif de détection de vitesse (1) selon l'une quelconque des revendications 1 à 5, comprenant en outre :
une partie de commande de courant adaptée pour fournir alternativement une première période pendant laquelle un courant passe à travers les trois bobines d'excitation (2) et une seconde période pendant laquelle aucun courant ne passe à travers celles-ci et pour régler la première période pour qu'elle soit égale ou supérieure à une longueur de temps requise pour que la partie d'estimation de vitesse (4) estime la vitesse de déplacement du corps en mouvement relatif (6).

7. Dispositif de détection de vitesse (1) selon la revendication 6, dans lequel
la partie d'estimation de vitesse (4) est adaptée pour estimer la vitesse de déplacement du corps en mouvement relatif (6) après un laps de temps prédéterminé depuis un début de la première période.

8. Dispositif de détection de vitesse (1) selon l'une quelconque des revendications 1 à 7, dans lequel
le courant alternatif (iᵢₙⱼ) est passé à travers les trois bobines d'excitation (2) de sorte qu'un flux magnétique lié à l'une centrale des trois bobines d'excitation (2) est concentré, et les flux magnétiques se déplaçant vers l'extérieur à partir des trois bobines d'excitation (2) autres que la bobine centrale s'annulent les uns les autres,
les première à troisième bobines d'excitation (2) sont disposées séquentiellement le long de la première direction (X),
une direction d'un flux magnétique généré par la première bobine d'excitation (2) est opposée à une direction d'un flux magnétique généré par la deuxième bobine d'excitation (2),
une direction d'un flux magnétique généré par la troisième bobine d'excitation (2) est opposée à la direction du flux magnétique généré par la deuxième bobine d'excitation (2),
dans une direction inverse à la première direction (X) par rapport à la première bobine d'excitation (2), le flux magnétique de la première bobine d'excitation (2) et le flux magnétique de la deuxième bobine d'excitation (2) s'annulent l'un l'autre,
dans la première direction (X) par rapport à la première bobine d'excitation (2), le flux magnétique de la première bobine d'excitation (2) et le flux magnétique de la deuxième bobine d'excitation (2) se renforcent l'un l'autre,
dans la première direction (X) par rapport à la troisième bobine d'excitation (2), le flux magnétique de la deuxième bobine d'excitation (2) et le flux magnétique de la troisième bobine d'excitation (2) s'annulent l'un l'autre, et
du côté opposé à la première direction (X) par rapport à la troisième bobine d'excitation (2), le flux magnétique de la deuxième bobine d'excitation (2) et le flux magnétique de la troisième bobine d'excitation (2) se renforcent l'un l'autre.

9. Méthode de suppression de champ magnétique parasite, comprenant les étapes suivantes :
le fait de permettre à trois bobines d'excitation (2) voisines de générer des flux magnétiques en faisant passer un courant alternatif (iᵢₙⱼ) à partir d'une source de courant (15) vers une bobine d'excitation (2) centrale, à partir de la bobine d'excitation centrale via les autres bobines d'excitation, qui sont connectées électriquement en parallèle, et ensuite vers la source de courant (15) ;
la génération, en utilisant une pluralité de bobines de détection (3), de tensions induites correspondant chacune à un flux magnétique produit par un courant de Foucault généré sur un corps conducteur en mouvement relatif (6), le courant de Foucault étant généré de manière à correspondre à une vitesse de déplacement du corps en mouvement relatif (6) se déplaçant à travers les flux magnétiques générés par le courant alternatif (iᵢₙⱼ) circulant à travers les trois bobines d'excitation (2) ;
le fait d'amener les flux magnétiques générés par le courant alternatif (iᵢₙⱼ) circulant à travers les trois bobines d'excitation (2) à être liés à au moins deux de la pluralité de bobines de détection (3), qui sont placées de telle sorte qu'elles subissent le même flux magnétique lorsque le corps en mouvement relatif (6) est à l'arrêt, mais des flux magnétiques différents lorsque le corps en mouvement relatif (6) est en mouvement ; et
la détermination de la vitesse de déplacement à partir d'une différence entre les tensions induites des deux bobines de détection (3).
